(19) **Europäisches Patentamt / European Patent Office / Office européen des brevets**

(11) **EP 1 854 625 B1**

(12) # EUROPEAN PATENT SPECIFICATION

(45) Date of publication and mention
of the grant of the patent:
**20.11.2019 Bulletin 2019/47**

(51) Int Cl.:
**B32B 27/08** *(2006.01)*      **B32B 27/32** *(2006.01)*
**B65D 65/40** *(2006.01)*      **C08L 23/10** *(2006.01)*

(21) Application number: **07100610.0**

(22) Date of filing: **16.01.2007**

(54) **MULTILAYER HEAT SHRINKABLE COOK-IN FILM**

WÄRMESCHRUMPFBARE MEHRSCHICHTKOCHFOLIE

FILM MULTICOUCHE THERMORÉTRÉCISSABLE POUR CUISSON

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.05.2006 EP 06113872**

(43) Date of publication of application:
**14.11.2007 Bulletin 2007/46**

(73) Proprietor: **Flexopack S A**
**19400 Koropi Attikis (GR)**

(72) Inventors:
• **Ginossatis, Dimitrios**
**Porto Rafti, 19003 (GR)**

• **Roussos, George**
**Dafne, 17235 (GR)**

(74) Representative: **Isarpatent**
**Patent- und Rechtsanwälte Behnisch Barth Charles**
**Hassa Peckmann & Partner mbB**
**Postfach 44 01 51**
**80750 München (DE)**

(56) References cited:
**EP-A1- 1 332 868        WO-A-97/12758**
**DE-A1-102004 042 968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is directed to a cook-in film and to bags, pouches and the like made therefrom. The invention is further directed to a method of producing and preserving a food product using such a film, bag or pouche and to a packaged food product obtained therefrom.

Many food products are processed in thermoplastic film packages by subjecting the packed product to elevated temperatures produced by, for example, exposure to steam, hot air or immersion into boiling water. This thermal processing is usually called cook-in and the films used for such applications are generally called cook-in films.

A cook-in film must be capable of withstanding exposure to severe temperature conditions like immersion in hot water of temperature 70 to 90 °C for a time period of about 4 to 18 hours. During these severe thermal conditions, the film should be able to withstand

> 1. Opening of the seals
> 2. Delamination of the different layers of the multilayer structure.

A further desirable effect of the cook-in films is heat shrinkability, which is the ability of a film to shrink under heat conditions so that it conforms tightly to the packed food and gives a good aesthetic appearance.

A further desirable effect is good optical properties, meaning high gloss and low haze of the film, providing a nice presentation to the consumer.

Another desirable effect is the ability of the film to heat seal effectively in commercial bag making machines. The reason for this is that very often, the film is used in the form of a bag (pouch) in which the product is packed under vacuum and then is put in a hot water bath or in a steam container in order to be cooked.

Thus, it would be desirable to make a heat shrinkable film combining all these different requirements

> 1. Resistance to bag opening and delamination
> 2. High shrinkage
> 3. Excellent optics
> 4. Efficient heat sealability

It is also known in the art a similar process called post pasteurization. Many foods require pasteurization after being hermetically packed so that harmful microbes are destroyed. Specific pasteurization requirements may vary from country to country but 1 hour at 95°C is considered a possible limiting case. The film of the invention may be used also to withstand these conditions.

In the prior art, often polypropylene copolymers have been proposed to be used in cook-in applications. These copolymers generally have vicat softening point more than 115°C. This makes the film hard to seal in an effective way both by the producer and by the packer of the final product before the cook-in process. This problem is addressed and solved by the structures of this application, without sacrificing the cook-in performance.

WO97/12758 discloses a backseamed casing comprising a heat-shrinkable casing film comprising: (A) a first outer layer serving as an inside casing layer, the first outer layer comprising a first polyolefin comprising at least one member selected from the group consisting of: (i) ethylene/unsaturated acid copolymer, propylene/unsaturated acid copolymer, and butene/unsaturated acid copolymer, wherein the unsaturated acid is present in an amount of at least 4 weight percent, based on the weight of the copolymer; and (ii) anhydride-containing polyolefin comprising an anhydride-functionality, wherein the anhydride functionality is present in an amount of at least 1 weight percent, based on the weight of the anhydride-containing polyolefin; (B) a second layer comprising at least one member selected from the group consisting of polyester, and first polyamide; and (C) a third layer serving as an outside casing layer, the third layer comprising at least one member selected from the group consisting of second polyolefin, polystyrene, and second polyamide; and wherein the second layer is between the first layer and the third layer, and the second layer has a thickness of at least about 5% of a total thickness of the heat shrinkable casing film.

SUMMARY OF THE INVENTION

It is, therefore, an object of the present invention to provide a heat shrinkable multilayer film having excellent optics, efficient heat sealability, resistance to bag seal opening (failure) and delamination. It is a further object of the present invention to provide a cook-in film having the above properties.

These objects are achieved by the subject-matter of the independent claims. Preferred embodiments are set forth in the dependent claims.

The invention is based on the surprising insight that multilayer films for high temperature applications (up to about 95°C; so called cook-in films) may be produced by introducing a heat sealing layer comprising a polypropylene polymer with a vicat softening point of less than 105°C. This is surprising since a skilled person having average knowledge in this field would expect those films to be unstable. In particular, a skilled person would expect opening of the seals and delaminating of the different layers of the multilayer structure, if a sealing layer comprising a polypropylene polymer with a vicat softening point of less than 105°C is chosen.

However, it surprisingly turned out that the multilayer films of the present invention remained stable under these circumstances, i.e. did not show opening of the seals and delamination. Moreover, and even more unexpected, the multilayer film of the invention showed an improved heat sealability due to using an inner heat sealing layer having the above properties.

Thus, a very stable multilayer film for cook-in applications could be generated having improved characteristics regarding opening of the seals and delamination, but also regarding heat-shrinkability and optics.

The vicat softening point of a blend is calculated as follows:

$$Vb=x1*v1+x2*v2$$

where

Vb=softening point of the blend
V1=softening point of component 1
V2=softening point of component 2
X1=percentage per mass of component 1 in the blend
X2=percentage per mass of component 2 in the blend

The definitions used in the following are as follows:

The term " film" refers to a flat or tubular flexible structure of thermoplastic material. A "cook-in film" is more specifically defined as being a film adapted for high temperature applications, e.g. treatment with hot water at temperatures up to about 95°C.

The term "heat shrinkable" refers to a film that shrinks at least 10% in at least one of the longitudinal and transverse directions when heated at 90°C for 4 seconds. The shrinkability is measured according to ASTM 2732. This test method covers the determination of the degree of unrestrained linear thermal shrinkage at given specimen temperatures of a plastic film and sheeting of 0.76 mm thickness or less.

All measurement methods mentioned herein are readily available for the skilled person. For example, they can be obtained from the American National Standards Institute at: www.webstore.ansi.org

The phrase "longitudinal direction" or " machine direction" herein abbreviated " MD" refers to a direction along the length of the film.

The phrase "outside layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is preferably less than 40%.

As used herein the phrase "ethylene vinyl acetate copolymer" refer to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "polypropylene" refers to any homopolymer, copolymer, terpolymer, tetrapolymer etc. that includes mer units of propylene. The term as used in the present application includes homopolymers, random copolymers, propylene alpha olefin copolymers, propylene ethylene copolymers propylene-ethylene-alpha olefin copolymers and other propylene polymers.

DETAILED DESCRIPTION

According to a first aspect, the present invention provides a heat shrinkable film comprising at least a heat sealing layer as an inner layer, a barrier layer and an outer layer, wherein the heat sealing layer comprises a polypropylene polymer, wherein the polymer and the heat sealing layer have a vicat softening point of less than 100°C measured according to ASTM D 1525, wherein the polypropylene polymer of the heat sealing layer is blended with an ethylene alpha olefin copolymer which has a vicat softening point less than 100°C.

PP might be present as a heterogeneous or a homogeneous polymer produced with single site catalyst. It may also be a blend of such a material with the following

    1. another PP polymer such as random copolymer or homopolymer(among others)
    2. a polyethylene polymer such as an alpha olefin copolymer with density 0.860 to about 0.960 or such as an ethylene ester copolymer
    3. a cyclic olefin copolymer
    4. a styrene polymer
    5. an ionomer or a methacrylic acid copolymer
    6. polybutene polymer

As mentioned above, this is an unexpected effect, as the vicat softening point of the polymer is so close to the actual thermal conditions that the material is subjected (going up to 95°C).

The Vicat softening point is the determination of the softening point for materials such as polypropylene or polyethylene, which have no definite melting point. It is taken as the temperature at which the specimen is penetrated to a specified depth by a flat-ended needle with a defined circular or square cross-section, under a specified load.

Examples of ethylene alpha olefin copolymers that could be useful are

-    Homogeneous ethylene alpha olefin copolymers like the EXACT grades from EXXON;
-    Homogeneous ethylene alpha olefin copolymers with long chain branching such as the AFFINITY grades from DOW;
-    TAFMER linear ethylene alpha olefin copolymers from MITSUI.

The oxygen barrier used may be a material such as a polyvinylidene chloride homopolymer or copolymer or an ethylene vinyl alcohol copolymer (EVOH). Other oxygen barrier materials are also well known in the art. As example, oxygen barrier materials, also polyamides or polyesters may be used.

In the outside layer the following materials may be used

    1. a polypropylene homopolymer or copolymer having a vicat softening point of less than 105°C measured under ASTM D 1525. It is preferably a homogeneous polymer produced with single site catalyst,
    2. PP polymer such as random copolymer or homopolymer (among others)
    3. Polyethylene polymer such as an alpha olefin copolymer with density 0.860 to about 0.960 or such as an ethylene ester copolymer
    4. a cyclic olefin copolymer
    5. a styrene polymer
    6. an ionomer or a methacrylic acid copolymer

A preferred version comprises a

    1. styrene butadiene copolymer
    2. a blend of styrene butadiene copolymer and an ethylene alpha olefin copolymer
    3. a reactor made TPO polymer incorporating propylene mer units
    4. a blend of a reactor made TPO polymer incorporating propylene mer units and polypropylene homopolymer or copolymer

5. a propylene ethylene polymer with a vicat softening point less than 100°C
6. a blend of two propylene ethylene polymers with a vicat softening point less than 100°C

Between the inner heat sealing layer and the oxygen barrier layer may exist further layers that could comprise any of the polymers mentioned in the possibilities for inner heat sealing layer. Preferred materials are ethylene vinyl acetate, ethylene alpha olefin copolymers, EMA polymers, polypropylene copolymers, polybutylene, styrene homopolymers or copolymers.

Any of the layers described above may also include additives well known in the art such as slip agents, antiblock, polymer processing aids, antistatic, antifog, acid scavengers, odour scavengers and the like. A person skilled in the art may select the right additives according to any particular needs.

In a preferred version of the application, the film is irradiated with e beam radiation of levels from 1 to 10 MRAD.

All the percentages indicated in this application are per weight except if differently stated.

EXAMPLES

Example 1 (reference)

A 5 layer film is produced in a double bubble (the double bubble method is described in US 3,456,044, incorporated herein by reference) commercial line with the following structure:

|  |  |
|---|---|
| Inner (sealing) layer, 100% PP1 | |
| Adjacent layer | 93% E1+ 7% ADDITIVES |
| Barrier layer | PVDC commercial grade |
| Adjacent layer | 30% M1+ 65% E3+ 5% ADDITIVES |
| Outer layer | 95% S1+ 5% ADDITIVES |

See table 1,2

Example 2 (reference)

A 5 layer film is produced in a double bubble (the double bubble method is described in US 3,456,044) commercial line with the following recipe

|  |  |
|---|---|
| Inner(sealing layer), 80%PP1+20% PP2 | |
| Adjacent layer | 93% E1+ 7% ADDITIVES |
| Barrier layer | PVDC commercial grade |
| Adjacent layer | 30% M1+ 65% E3+ 5% ADDITIVES |
| Outer layer | 95% S1 + 5% ADDITIVES |

Example 3 (reference)

A 5 layer film is produced in a double bubble (the double bubble method is described in US 3,456,044, included herein by reference) commercial line with the following recipe

|  |  |
|---|---|
| Inner(sealing layer), 100% PP3 | |
| Adjacent layer | 93% E1+ 7% ADDITIVES |
| Barrier layer | PVDC commercial grade |
| Adjacent layer | 30% M1+ 65% E3+ 5% ADDITIVES |
| Outer layer | 95% S1+ 5% ADDITIVES |

See table 1, 2

Example 4

A 5 layer film is produced in a double bubble commercial line with the following recipe:

Inner(sealing layer), 95% PP1+5% B1

| | |
|---|---|
| Adjacent layer | 93% E1+ 7% ADDITIVES |
| Barrier layer | PVDC commercial grade |
| Adjacent layer | 30% M1+ 65% E3+ 5% ADDITIVES |
| Outer layer | 60% PP1+ 35% PP6+5% ADDITIVES |

Example 5

A 5 layer film is produced in a double bubble commercial line with the following recipe:

Inner(sealing layer), 95% PP1+10% B1

| | |
|---|---|
| Adjacent layer | 93% E1 + 7% ADDITIVES |
| Barrier layer | PVDC commercial grade |
| Adjacent layer | 30% M1 + 65% E3+ 5% ADDITIVES |
| Outer layer | 60% PP1 + 35% PP6+5% ADDITIVES |

Example 6

A 5 layer film is produced in a double bubble commercial line with the following recipe:

Inner(sealing layer), 95% PP1+15% B1

| | |
|---|---|
| Adjacent layer | 93% E1+ 7% ADDITIVES |
| Barrier layer | PVDC commercial grade |
| Adjacent layer | 30% M1+ 65% E3+ 5% ADDITIVES |
| Outer layer | 60% PP1+ 35% PP6+5% ADDITIVES |

Example 7

A 5 layer film is produced in a double bubble commercial line with the following recipe:

Inner(sealing layer), 95% PP1+5% B1

| | |
|---|---|
| Adjacent layer | 93% E1+ 7% ADDITIVES |
| Barrier layer | PVDC commercial grade |
| Adjacent layer | 25% PP1+25% B2+ 50% M1 |
| Outer layer | 90% PP4+ 10% PP5 |

See table 1, 2
In all the above examples, the thickness of the layers are (in microns)

8, outer layer

10, adjacent layer

4, barrier layer

6, adjacent layer

27, heat sealing layer

Comparative example

Under exactly the same conditions a commercial product FMXBK was produced. It is noted that FMXBK does not contain polypropylenes of the specific kind as defined in the invention in the sealing layer.

All the samples were e-beam radiated with a dose of 4 MRAD prior to bag making.

TABLE 1

| Type | Description | Manufacturer | Melt Index g/10 min | Density g/cm$^3$ | Melting point °C. |
|------|-------------|--------------|---------------------|------------------|-------------------|
| E1 | EVA | Dupont 3135 X | 0.35 | 0.93 | 95 |
| E2 | EVA | 1005 VN2 | 0.40 | 0.928 | 102 |
| E3 | EVA | Dupont 3165 | 0.7 | 0.94 | 89 |
| | | | | | |
| S1 | SB COPOLYMER | DK13 | 10 | 1.01 | |
| M1 | EMA copolymer | ARKEMA LOTRYL 29MAO3 | 2-3,5 | 0,95 | 61 |
| B1 | Ethylene alpha olefin copolymer | TAFMER 1085 | 1.2 | 0.885 | 68 |
| B2 | Ethylene alpha olefin copolymer | TAFMER P0480 | 1.8(230C, 2.16KG) | 0.87 | |

TABLE 2

| Type | Description | Melt Index g/10 min 230c, 2.16kg | Density g/cm$^3$ | Vicat softening point |
|------|-------------|----------------------------------|------------------|------------------------|
| | | | | |
| PP1 | PP copolymer | 2 | 0.89 | 97 |
| PP2 | RB707CF | 1.5 | 0.905 | 125 |
| PP3 | PP ethylene alpha olefin copolymer | 7 | 0.89 | 91 |
| PP4 | Reactor made TPO | 2 | 0.89 | |
| PP5 | PP homopolymer | 8 | 0.905 | 152 |
| PP6 | PP copolymer | 2 | 0.89 | 65 |

TABLE 3 (examples 1-3 are reference examples, not according to the invention)

| | HAZE | GLOSS | SHRINKAGE(MD/TD) at 90°C |
|---|------|-------|---------------------------|
| Example 1 | 6 | 102 | 42/42 |
| Example 2 | 7 | 101 | 38/37 |
| Example 3 | 7 | 99 | 41/41 |
| Example 4 | 10 | 82 | 41/41 |
| Example 5 | 11 | 78 | 40/41 |
| Example 6 | 11 | 77 | 41/43 |
| Example 7 | 13 | 75 | 30/31 |
| Comparison | 8 | 90 | 49/45 |

For better evaluation of the resistance of the sealing properties under cook-in conditions, the following experiment was executed.

Material from samples 1-7 and from the comparative sample were made into bag configuration in a pouch making machine. Then the bags were filled with water and sealed at the open end. Then the bags were put in a hot water bath and cooked at 95°C for 5 hours. After this thermal treatment, the bags were examined if their seals were destroyed and if delamination was noticed.

TABLE 4 Results of cook-in test (examples 1-3 are reference examples, not according to the invention)

| Example 1 | No bag opened |
|---|---|
| Example 2 | No bag opened |
| Example 3 | No bag opened |
| Example 4 | No bag opened |
| Example 5 | No bag opened |
| Example 6 | No bag opened |
| Example 7 | No bag opened |
| | |
| Comparison | All bags opened |

Haze is measured according to ASTM D 1003, gloss according to BS 2782 and shrinkage according to ASTM 2732.

**Claims**

1. A heat shrinkable film comprising at least a heat sealing layer as an inner layer, a barrier layer and an outer layer, wherein the heat sealing layer comprises a polypropylene polymer, wherein the polymer and the heat sealing layer have a vicat softening point of less than 100°C measured according to ASTM D 1525, wherein the polypropylene polymer of the heat sealing layer is blended with an ethylene alpha olefin copolymer which has a vicat softening point less than 100°C.

2. The film according to claim 1, where the film comprises an adjacent layer which may comprise an ethylene vinyl acetate copolymer and/or an ethylene alpha olefin copolymer.

3. The film according to any of the preceding claims, where the film comprises a barrier layer incorporating a high oxygen barrier material, such as EVOH, PVDC or polyamide.

4. The film according to any of the preceding claims where the film comprises an outside layer incorporating

    • a polypropylene polymer
    • an ethylene alpha olefin copolymer
    • a styrene butadiene polymer
    • a polyamide
    • a polybutene and/or
    • an EVOH polymer

5. The film according to any of the preceding claims incorporating between the outside and barrier as well as between sealing and barrier other layers incorporating other polymers.

6. The film according to any of the preceding claims where the film is irradiated.

7. The film according to any of the preceding claims having a flat or tubular form.

8. A bag or pouch made by the film of one or more of claims 1-7.

9. A method of packaging and preserving a food product, comprising the steps of:

a) providing a film as defined in one or more of claims 1-7 or a bag or pouch as defined in claim 8, and a food product;

b) packaging the food product into said film, bag or pouch;

c) subjecting the packaged food product to an elevated temperature for a predefined time thereby preserving the food product.

10. The method of claim 9, wherein the elevated temperature is in a range of between 70-98°C, preferably 95°C.

11. The method of claim 10, wherein the time period for subjecting the packaged food product to an elevated temperature is between 1 and 18 hours.

12. The method of one or more of claims 9-11, wherein the packaged food product is subjected to an elevated temperature by immersing in hot water.

13. A packaged food product obtainable by the method of claims 9-12.

**Patentansprüche**

1. Wärmeschrumpffähige Folie, umfassend mindestens eine Wärmeversiegelungsschicht als Innenschicht, eine Barriereschicht und eine Außenschicht, wobei die Wärmeversiegelungsschicht ein Polypropylenpolymer umfasst, wobei das Polymer und die Wärmeversiegelungsschicht einen Vicat-Erweichungspunkt von weniger als 100°C aufweisen, gemessen gemäß ASTM D 1525, wobei das Polypropylenpolymer der Wärmeversiegelungsschicht mit einem Ethylen-alpha-Olefin-Copolymer vermischt ist, das einen Vicat-Erweichungspunkt von weniger als 100°C aufweist.

2. Folie nach Anspruch 1, wobei die Folie eine benachbarte Schicht umfasst, die ein Ethylen-Vinylacetat-Copolymer und/oder ein Ethylen-alpha-Olefin-Copolymer umfassen kann.

3. Folie nach einem der vorhergehenden Ansprüche, wobei die Folie eine Barriereschicht umfasst, die ein Material mit hoher Sauerstoffbarriere, wie EVOH, PVDC oder Polyamid, beinhaltet.

4. Folie nach einem der vorhergehenden Ansprüche, wobei die Folie eine Außenschicht umfasst, die Folgendes beinhaltet

   • ein Polypropylen-Polymer
   • ein Ethylen-alpha-Olefin-Copolymer
   • ein Styrol-Butadien-Polymer
   • ein Polyamid
   • ein Polybuten und/oder
   • ein EVOH-Polymer

5. Folie nach einem der vorhergehenden Ansprüche, die zwischen der Außenseite und der Barriere sowie zwischen der Versiegelung und der Barriere andere Schichten mit anderen Polymeren beinhaltet.

6. Folie nach einem der vorhergehenden Ansprüche, bei dem die Folie bestrahlt ist.

7. Die Folie nach einem der vorhergehenden Ansprüche welche eine flache oder schlauchförmige Form aufweist.

8. Tüte oder Beutel, hergestellt mittels der Folie eines oder mehrerer der Ansprüche 1-7.

9. Verfahren zum Verpacken und Konservieren eines Lebensmittelproduktprodukts, umfassend die Schritte:

   a) Bereitstellen einer Folie nach einem oder mehreren der Ansprüche 1-7 oder einer Tüte oder eines Beutels nach Anspruch 8 und eines Lebensmittelprodukts;
   b) Verpacken des Lebensmittelprodukts in die Folie, die Tüte oder den Beutel;
   c) Einwirken einer erhöhten Temperatur für eine vorbestimmte Zeit auf das verpackte Lebensmittelprodukt, wodurch das Lebensmittelprodukt konserviert wird.

**10.** Verfahren nach Anspruch 9, wobei die erhöhte Temperatur in einem Bereich zwischen 70-98°C, vorzugsweise 95°C liegt.

**11.** Verfahren nach Anspruch 10, wobei die Zeitspanne, um das verpackte Lebensmittelprodukt einer erhöhten Temperatur auszusetzen, zwischen 1 und 18 Stunden liegt.

**12.** Verfahren nach einem oder mehreren der Ansprüche 9-11, wobei das verpackte Lebensmittelprodukt durch Eintauchen in heißes Wasser einer erhöhten Temperatur ausgesetzt wird.

**13.** Verpacktes Lebensmittelprodukt, erhältlich nach dem Verfahren der Ansprüche 9-12.

**Revendications**

**1.** Film thermorétractable comprenant au moins une couche de thermoscellage en tant que couche intérieure, une couche barrière et une couche extérieure, dans lequel la couche de thermoscellage comprend un polymère de polypropylène, dans lequel le polymère et la couche de thermoscellage ont une température de ramollissement Vicat inférieure à 100 °C, mesurée selon la norme ASTM D 1525, dans lequel le polymère de polypropylène de la couche de thermoscellage est mélangé avec un copolymère d'éthylène-alpha oléfine qui a une température de ramollissement Vicat inférieure à 100 °C.

**2.** Film selon la revendication 1, dans lequel le film comprend une couche adjacente qui peut comprendre un copolymère d'éthylène-acétate de vinyle et/ou un copolymère d'éthylène-alpha oléfine.

**3.** Film selon l'une quelconque des revendications précédentes, dans lequel le film comprend une couche barrière contenant un matériau formant barrière élevée à l'oxygène, tel que l'EVOH, le PVDC ou le polyamide.

**4.** Film selon l'une quelconque des revendications précédentes, dans lequel le film comprend une couche extérieure contenant :

- un polymère de polypropylène
- un copolymère d'éthylène-alpha oléfine
- un polymère de styrène-butadiène
- un polyamide
- un polybutène et/ou
- un polymère EVOH.

**5.** Film selon l'une quelconque des revendications précédentes, contenant entre l'extérieur et la barrière ainsi qu'entre la couche de scellage et la couche barrière d'autres couches contenant d'autres polymères.

**6.** Film selon l'une quelconque des revendications précédentes, dans lequel le film est exposé à un rayonnement.

**7.** Film selon l'une quelconque des revendications précédentes, présentant une forme plate ou tubulaire.

**8.** Sac ou poche constitué(e) du film selon une ou plusieurs des revendications 1 à 7.

**9.** Procédé de conditionnement et de conservation d'un produit alimentaire, comprenant les étapes consistant à :

a) se procurer un film tel que défini dans une ou plusieurs des revendications 1 à 7 ou encore un sac ou une poche tel(le) que défini(e) dans la revendication 8, ainsi qu'un produit alimentaire ;
b) conditionner le produit alimentaire dans ledit film, ledit sac ou ladite poche ;
c) soumettre le produit alimentaire conditionné à une température élevée pendant un temps prédéfini, de manière à conserver le produit alimentaire.

**10.** Procédé selon la revendication 9, dans lequel la température élevée est comprise dans une plage de 70 à 98 °C, de préférence égale à 95 °C.

**11.** Procédé selon la revendication 10, dans lequel la période de temps pour soumettre le produit alimentaire conditionné à une température élevée est comprise entre 1 et 18 heure(s).

12. Procédé selon une ou plusieurs des revendications 9 à 11, dans lequel le produit alimentaire conditionné est soumis à une température élevée par immersion dans de l'eau chaude.

13. Produit alimentaire conditionné pouvant être obtenu au moyen du procédé selon les revendications 9 à 12.

**EP 1 854 625 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9712758 A

- US 3456044 A